# EUROPEAN PATENT SPECIFICATION

(11) **EP 2 442 968 B1**
(45) Date of publication and mention of the grant of the patent: **06.08.2014**
(21) Application number: 10742579.5
(22) Date of filing: 17.06.2010
(51) Int. Cl.: B29D 30/06, B29C 33/20

(54) **A TIRE CURING PRESS AND TIRE CURING PROCESS**
PRESSE FÜR REIFENVULKANISIERUNG UND REIFENVULKANISIERVERFAHREN
PRESSE DE VULCANISATION DE PNEUS ET PROCÉDÉ DE VULCANISATION DE PNEUS

(30) Priority: 19.06.2009 TR 200904796
(43) Date of publication of application: 25.04.2012
(73) Proprietor: Uzer Makina ve Kalip Sanayi Anonim Sirketi Anonim Sirketi, Arslanbey, 41285 Izmit (TR); Yurdakul, Ata, 41285 Izmit (TR)
(72) Inventor: YURDAKUL, Ata, 41285 Izmit (TR); KOBYA, Erhan, 41285 Izmit (TR); YETGIN, Ertan, 41285 Izmit (TR)
(74) Representative: Dericioglu Kurt, Ekin
(86) International application number: PCT/IB2010/052731
(87) International publication number: WO 2010/146554

(56) References cited:
- DE-A1- 19 817 822
- FR-A- 1 314 771
- JP-A- 62 057 753
- US-A- 4 804 318
- US-A1- 2004 032 057
- US-A1- 2008 057 151

## Description

### Field of the Invention

The present invention relates to a tire curing press which is used in tire production and to a tire curing process by using said curing press.

### Background of the Invention

In tire curing presses, final form of the green tire which doesn't have any shape or pattern is given in special molds under a specified temperature and pressure within a predefined period. General form, all pattern and sidewall branding processes of the tire occur during this curing. The molds are comprised of two pieces in tire curing presses, namely upper and lower. Before the curing process begins, the curing bladder of the green tire is placed in the lower mold such that it will be within the tire. The upper mold is closed onto the lower mold and it is locked. Heaters such as hot water or steam are applied into the curing bladder and the curing bladder pushes the green tire towards the edges of the mold by swelling. Meanwhile, the mold is heated from bottom and above by heat platens. Thus, the tire takes the form of the mold under pressure and temperature.

Being able to keep the mold under sufficient press is one of the important steps in the tire curing process. The pressure formed by the curing bladder in the tire is maintained by pressing the upper mold to the lower mold. There are two types of tire curing presses in order to obtain this pressure, namely mechanical and hydraulic. In mechanical press, the upper mold is locked onto the lower mold mechanically and the internal pressure is maintained. In hydraulic presses, the mold is kept under pressure by hydraulic cylinders continuously.

In hydraulic presses, the mold is kept under press in two ways. In one of the practices, the upper body keeps the mold under press by being moved via press cylinders. In the other practice, the upper body and the lower body are fixed. The mold is placed on a heat plate which is moved by the press cylinders on the lower body of the mold and press process is provided with the movement of this plate.

In the second type of practice, the lifting cylinders increase the upper body to the top level at the end of each cycle because the mold thickness is carried out independently of the positions of the lower and upper bodies. Since this takes a long time and causes the lifting cylinders to operate extra, it leads to time and energy loss. In the first type of practice, when the upper body reaches the press position, the lock mechanism on the upper body is locked to the recessed/protruding part located on the columns. Pulling the upper body down during pressing may cause the recessed/protruding structure to apply pressure to the lock mechanism and the mechanism to be stuck during opening. Molds of different heights are used in tire curing presses. In order that machine operates in accordance with the new mold after mold change, mold height adjustment must be made. However, there is no press machine which can make the height adjustment operation of the mold automatically.

The German Patent document no DE19817822A1, an application in the state of the art, discloses presses having column locking mechanism. The columns of the press are designed to move inside the lower body. a drive member moves the upper body upwards and downwards. the lower body can lock on the indented surface via the lock mechanism included therein. The pressing machine resembles the invention in terms of the columns of the pressing machine being movable and comprising a lock mechanism. However the rings on the column and the sensor on the upper body are not mentioned in the document.

The United States patent document one US2008057151, an application known in the state of the art, discloses a machine having column locking mechanism. Tie bars of the machine are designed to move inside the platen. A drive member moves the movable platen upwards and downwards. The movable platen can lock on the indented surface present on the tie bar via the locking mechanism included therein. The pressing machine resembles to the invention in terms of the platen being movable and comprising lock mechanism. However the rings on the column and the sensor on the upper body are not mentioned in the document.

The Japanese patent document no. JP3099796 (A)**,** an application in the state of the art, discloses a press machine. In the machine, the piston rod serves as column at the same time. The columns can move by means of the pistons to which they are connected. The upper body can move upwards-downwards on this column. The lock mechanism, which is provided on the upper body, can lock the upper body to the columns at any point on the column by means of its specific structure.

The Japanese patent document no. JP2052707 (A)**,** an application in the state of the art, discloses a locking mechanism. In the mechanism, the upper body can be moved rightward-leftward by the pistons. In addition, the column to which the upper body is connected can be moved rightward-leftward by the press pistons. When the upper body, which can move on the column, arrives the pressing position the recessed section on the column on thereof is matched to the locking mechanism by moving the column press pistons.

### Summary of the Invention

The objective of the present invention is to realize a tire curing press which facilitates the mold adjustment process.

Another objective of the present invention is to realize a tire curing press which prevents the locking mechanism from being stuck after the curing process.

A further objective of the present invention is to realize a tire curing press which reduces cycle time and energy consumption.

The invention also relates to a tire curing process by using said curing press.

### Detailed Description of the Invention

A tire curing press realized to fulfill the objectives of the present invention is illustrated in the accompanying figures wherein:

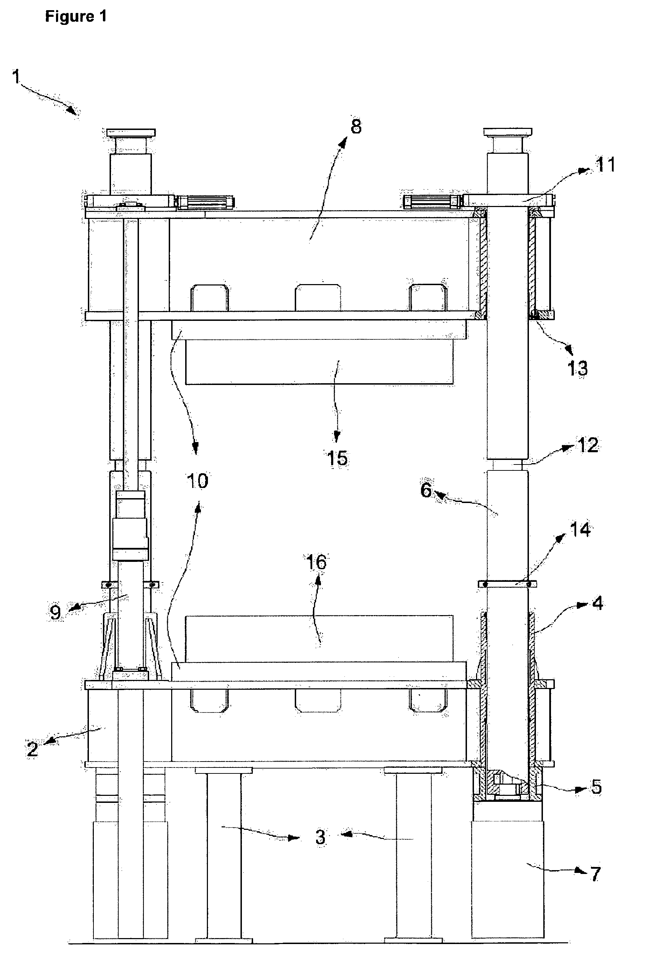

Figure 1 is the front view of the inventive tire curing press.

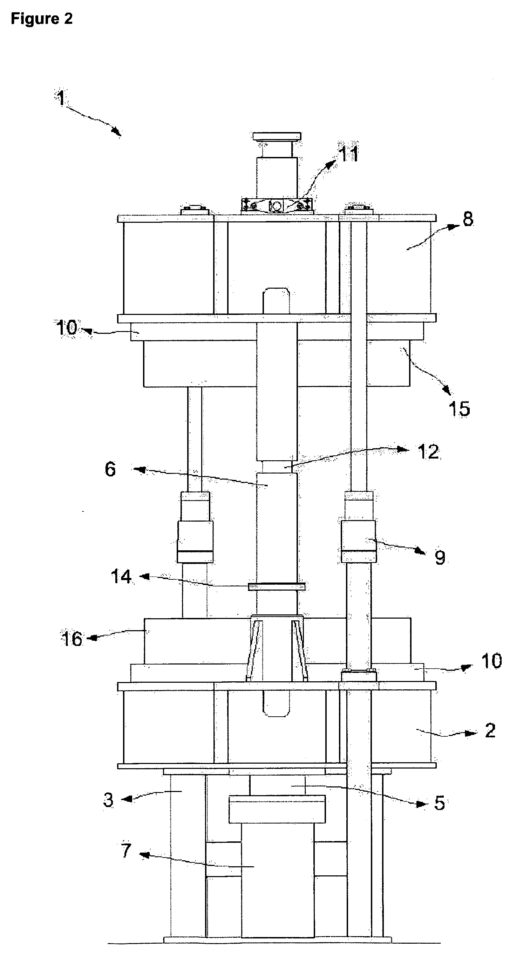

Figure 2 is the side view of the inventive tire curing press.

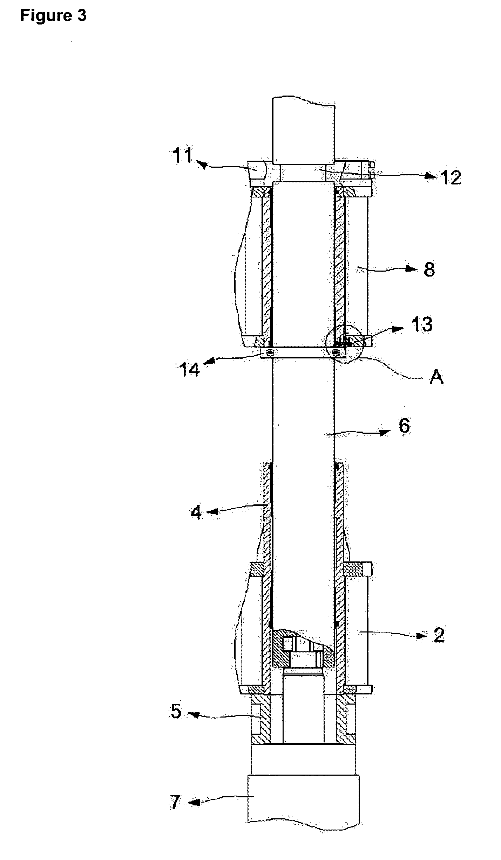

Figure 3 is the front view of the floating column.

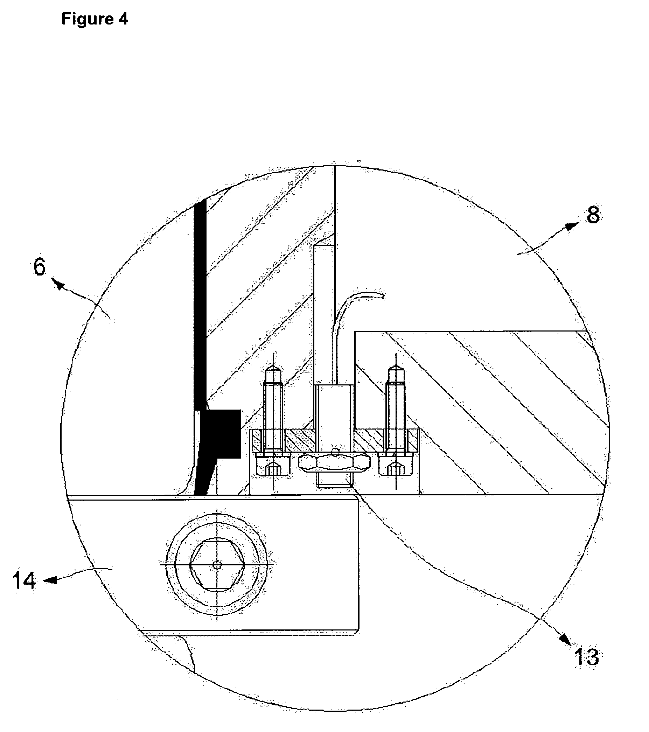

Figure 4 is the view of the A detail belonging to the Figure 3.

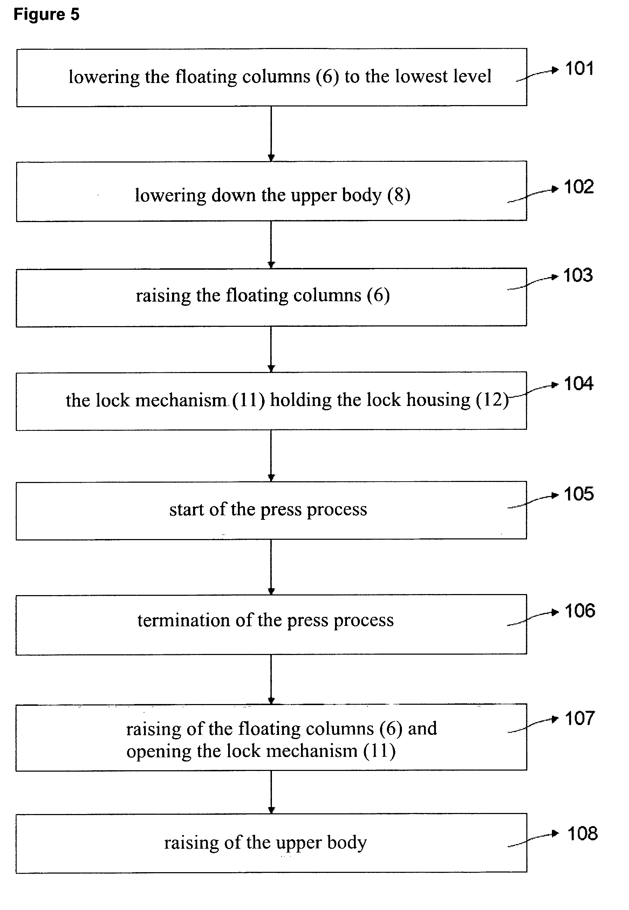

Figure 5 is the algorithm of the steps which are used in the tire curing press.

The components given in the figures are individually numbered where the numbers refer to the following:
1. Tire curing press
2. Lower body
3. Press stands
4. Column housing
5. Press cylinder connector
6. Floating column
7. Press cylinder
8. Upper body
9. Lifting cylinder
10. Heat plate
11. Lock mechanism
12. Lock housing
13. Sensor
14. Ring
15. Upper mold
16. Lower mold

The inventive tire curing press (1) comprises:
- a lower body (2),
- at least two press stands (3) which fix the lower body (2) to the floor,
- at least two column housings (4) which are extended outwards at the two sides of the lower body (2),
- at least one press cylinder connector (5) which is mounted under each column housing (4),
- at least one floating column (6) which extends upwards through from inside each column housing (4),
- at least one press cylinder (7) which provides upward-downward movement of the floating columns (6) and which is connected to the lower body by the press cylinder connector (5) and located under the floating column (6),
- at least one upper body (8) which moves downwards-upwards on the floating columns (6),
- at least two lifting cylinders (9) which provide upward-downward movement of the upper body (8) and are fixed to the lower body (2),
- at least two heat plates (10) which are located at the lower surface of the upper body (8) and at the upper surface of the lower body (2) and used for heating the mold,
- at least one lock housing (12) which is located on the floating column (6),
- at least one lock mechanism (11) which is located on the upper part of the upper body (8) and enables the upper body (8) to be fixed on the floating column (6) by squeezing the lock housing (12),
- at least one ring (14) which is mounted such that it will prevent the downward movement of the upper body (8) on each floating column (6),
- at least one sensor (13) which is mounted under the upper body (8), located on the side part of each floating column (6) and indicates that the floating columns (6) are in correct position by detecting the ring (14),
- at least one upper mold (15) which is located on the lower surface of the upper body (8),
- at least one lower mold (16) which is located on the upper surface of the lower body (2) and
- at least one control system (K) which enables to determine the mold adjusting point.

The lower body (2) is fixed to the floor by the press stands (3). The column housings (4) are mounted to the sides of the lower body (2). The column housings (4) are fixed to the upper and lower parts of the lower body (2) thus it doesn't move. The press cylinder connector (5) is mounted to the lower part of the column housings (4). The floating columns (6) fit into the column housings (4). Thus, they are enabled to move only vertically by preventing their horizontal movements. The press cylinders (7) are mounted to the lower body by means of the press cylinder connector (5). Whereas, the shafts of the press cylinders (7) are mounted to the base of the floating columns (6). Thereby, they provide vertical movement for the floating columns (6). The floating columns (6) pass through the upper body (8). But the upper body (8) doesn't squeeze the floating columns (6). Thus, the upper body (8) can move downwards-upwards on the floating columns (6). The lifting cylinder (9) passes through the lower body (2) and it is fixed to the lower body (2). Upper ends of the lifting cylinders (9) are fixed to the upper body (8). Thus, the lifting cylinders (9) raise the upper body (8) and move it downwards-upwards. There are lock mechanisms (11) at the upper part of the upper body (8). The floating columns (6) passing through the upper body (8) pass through the lock mechanisms (11) as well. There are lock housings (12) on the floating columns (6). The lock mechanism (11) fits to the lock housing (12) when the locking process is performed. There are sensors (13) at the lower part of the upper body (8). There are annular rings (14) on the floating columns (6). The sensors (13) determine whether the floating columns (6) are in correct position or not by detecting these rings (14). There are two heat plates (10) between which are the lower mold (16) and the upper mold (15) are squeezed, enable the mold to be heated and connected to the upper surface of the lower body (2) and the lower surface of the upper body (8).

Before the tire curing process begins, the press cylinders (7) bring the floating columns (6) to the lowest position. The lifting cylinders (9) raise the upper body (8) up to top level. This process is carried out only if a new mold is connected. For the next cycle, the floating columns (6) will remain fixed on a point to be determined as stated below. In order that the tire curing process begins, the green tire is placed in the lower mold and the operator gives a start command. Then the lifting cylinders (9) lower the upper body (8) until the upper mold (15) contacts the lower mold (16). After the upper mold (15) contacts the lower mold (16), the press cylinders (7) begin raising the floating columns (6). The floating columns (6) are raised until the rings (14) contact the bottom of the upper body (8). When the rings (14) contact the upper body (8), the lock housing (12) gets into the line of the lock mechanism (11) too. These contacting rings (14) are detected by the sensors (13) and they enable the mold adjusting point to be determined by sending signals to the control system (K). Upon this signal, the control system (K) stops raising the floating columns (6). Thus, the mold height in other words the point at which the floating columns (6) will remain fixed for this mold are determined. At the same time, the lock mechanism (11) gets the locking position against the lock housing (12). The control system (K) enables the lock mechanism (11) to be closed by sending signal. Thus, the upper body (8) is fixed on the floating columns (6). After the locking process, the press cylinders (7) begin pulling down the floating columns (6). By this means, pressure is applied to the mold (15,16) which remains under the upper body (8) fixed onto the floating columns (6). This pressure enables the curing process to occur, by preventing the mold (15,16) from opening due to internal pressure applied for the tire curing process.

When the tire curing process ends, the press cylinders (7) finish pulling down the floating columns (6). During press in the curing process, the lock mechanism (11) abuts against the upper surface of the lock housing (12) while the floating columns (6) are being pulled down. This causes the lock mechanism (11) to be stuck while it is being opened. In order to prevent this, the floating columns (6) of the press cylinders (7) are raised until the rings (14) contact the bottom of the upper body (8) and they are detected by the sensors (13). Thus, the lock mechanism (11) doesn't contact the upper and lower surface of the lock housing (12) and the lock mechanism (11) is opened without being stuck. Locking position of the upper body (8) is determined as well for the next curing cycle, by keeping the floating columns (6) fixed in this position.

If the tire curing process will be repeated with the same molds, the lifting cylinders (9) raise the upper body (8) to a height in direct proportion to the mold thickness. Thus, time and energy are saved by preventing the upper body (8) to be raised to a height more than it should be.

For the next curing cycle, the cured tire is removed from the mold (16) and green tire is placed in place of this. The lifting cylinders (9) raise the upper body (8) until it contacts the rings (14) on the floating columns (6) which are fixed at the end of the previous cycle. Since the floating columns (6) remain in the locking position, contact for the rings (14) is provided and it is proceeded to the locking and then press process by sending signal to the control system (K) by the sensors (13) which detect the rings (14). Thus, the tire curing press (1) eliminates the necessity of mold adjustment process in each cycle, by keeping the position of locking and proceeding to the press.

The press cylinders (7) lower the floating columns (6) to the lowest level if there happens any application that requires the process, such as mold change or maintenance, to be ended after the tire curing process. The lifting cylinders (9) raise the upper body (8) up to top level. The above described process is repeated upon the tire curing process is started.

The fact that the floating columns (6) are taken to the press start position by means of the sensors (13) and the rings (14) automatically while the process of mold height adjustment is carried out before the tire curing process begins, facilitates the mold adjustment process.

The following steps are followed in the process cycle used in the said tire curing press (1) according to claim 3:
- lowering the floating columns (6) to the lowest level (101)
- lowering down the upper body (8) (102)
- raising the floating columns (6) (103)
- the lock mechanism (11) holding the lock housing (12) (104)
- start of the press process (105)
- termination of the press process (106)
- raising of the floating columns (6) and opening the lock mechanism (11) (107)
- raising of the upper body (108).

While the cooking process begins, the press cylinders (7) lower the floating columns (6) up to the lowest level (101). Then the lifting cylinders (9) enable the upper mold (15) to contact the lower mold (16) by lowering down the upper body (8) (102). After the contact occurs, the long stroke press cylinders (7) raise the floating columns (6) until the rings (14) contact the upper body (8) and they are detected by the sensors (13). When the rings (14) are detected by the sensors (13), the sensors (13) send signal to the control system (K). The control system (K) activates the lock mechanism (11) and enables it to hold the lock housing (12) Thus, the upper body (8) is fixed on the floating columns (6) (104). The control system (K) saves this position. Thereby, the mold thickness is determined. The force required for keeping the pressure, which is needed for the curing process, between the molds (15,16) is obtained by the press cylinders (7) pulling down the floating columns (6) (105). After the curing process ends, the press cylinders (7) finish pulling down the floating columns (6) (106). Pulling down the floating columns (6) during the curing process causes the lock mechanism (11) to abut against the upper part of the lock housing (12) and it may cause to lock mechanism (11) to be stuck. In order to prevent this risk, the rings (14) are raised by the floating columns (6) until they contact the upper body (8) and are detected by the sensors (13), and the lock mechanism (11) is opened (107). The lifting cylinders (9) raise the upper body (8) in order to remove the processed tire and place the new one instead (108).

Within the scope of this basic concept, it is possible to develop various embodiments of the tire curing press (1). The invention is essentially according to the claims and it can not be limited to the examples described herein.

## Claims

1. A tire curing press (1) used in tire production **comprising:**
- a lower body (2),
- at least two press stands (3) which fix the lower body (2) to the floor,
- at least two column housings (4) which are extended outwards at the two sides of the lower body (2),
- at least one press cylinder connector (5) which is mounted under each column housing (4),
- at least one floating column (6) which extends upwards through from inside each column housing (4),
- at least one upper body (8) which moves downwards-upwards on the floating columns (6),
- at least two lifting cylinders (9) which provide upward-downward movement of the upper body (8) and are fixed to the lower body (2),
- at least two heat plates (10) which are located at the lower surface of the upper body (8) and at the upper surface of the lower body (2) and used for heating the mold,
- at least one lock housing (12) which is located on the floating column (6),
- at least one lock mechanism (11) which is located on the upper part of the upper body (8) and enables the upper body (8) to be fixed on the floating column (6) by squeezing the lock housing (12),
- at least one upper mold (15) which is located on the lower surface of the upper body (8),
- at least one lower mold (16) which is located on the upper surface of the lower body (2) and
- at least one control system (K) which enables to determine the mold adjusting point
**characterized by**
- the press cylinder (7) which enables the mold adjustment to be made automatically by raising the floating column (6) to the pressing position,
- at least one ring (14) which is mounted such that it will prevent the downward movement of the upper body (8) on each floating column (6),
- at least one sensor (13) which is mounted under the upper body (8), located on the side part of each floating column (6) and indicates that the floating columns (6) are in correct position by detecting the ring (14).

2. A tire curing press (1) according to claim 1 **characterized by** the sensor (13) which is mounted under the upper body (8), located on the side part of each floating column (6) and detects the ring (14) mounted on the floating columns (6) and by this means prevents the lock mechanism (11) from squeezing, and enables the floating columns (6) to remain in the correct position for the next cycle and sends signal to the control system (K) providing time and energy saving by preventing the lifting cylinders (9) from lifting the upper body (8) more than required during this new cycle.

3. A tire curing process by using the tire curing press (1) according to claim 1, **comprising** the steps of
- lowering the floating columns (6) connected to the press cylinders (7) to the lowest level with the downwards movement of the press cylinders (7) (101),
- lowering down the upper body (8) with the lifting cylinders (9) and the upper mold (15) contacting the lower mold (16) (102),
- the press cylinders (7) raising the floating columns (6) until the rings (14) contact the upper body (8) and they are detected by the sensors (13) (103),
- the upper body (8) being fixed on the floating column (6) upon the lock mechanism (11), activated by the control system (K) to which the sensors (13) send signal, squeezing the lock housing (12) (104),
- start of the pressing process upon the press cylinders (7) lowering down the floating columns (6) (105),
- termination of the pressing process upon the press cylinders (7) ends lowering down the floating columns (6) (106),
- raising the floating columns (6) until the rings (14) contact the upper body (8) and they are detected by the sensors (13) and opening the lock mechanism (11) (107),
- removing the processed tire and raising the upper body (8) with the lifting cylinder (9) to replace with the new one (108),
- and raising the floating columns (6) in order that the upper body (8) in the press position locks to the lock housings (12) (103).

4. A tire curing process according to claim 3 **characterized by** the step of raising the floating columns (6) until the rings (14) contact the upper body and are detected by the sensors (13) in order to prevent the lock mechanism (11) abutting against the upper part of the lock housing (12) from being stuck (107).

## Patentansprüche

1. Eine Presse (1) für Reifenvulkanisierung zur Anwendung bei der Reifenproduktion, **umfassend:**
- einen unteren Körper (2),
- mindestens zwei Pressenständer (3), die den unteren Körper (2) mit dem Boden verbinden,
- mindestens zwei Säulengehäuse (4), die sich über die zwei Seiten des unteren Körpers (2) nach außen erstrecken,
- mindestens ein Anschlussteil (5) für Pressenzylinder, welches unter jedem Säulengehäuse (4) befestigt ist,
- mindestens eine schwimmende Säule (6), die sich durch die innere Seite eines jeden Säulengehäuses (4) hindurch aufwärts erstreckt,
- mindestens einen oberen Körper (8), der sich auf der schwimmenden Säule (6) abwärts-aufwärts bewegt,
- mindestens zwei Hubzylinder (9), die die Aufwärts-Abwärts-Bewegung des oberen Körpers (8) ermöglichen und am unteren Körper (2) befestigt sind,
- mindestens zwei Wärmeplatten (10), die auf der unteren Oberfläche des oberen Körpers (8) sowie auf dem oberen Oberfläche des unteren Körpers (2) angeordnet sind und zur Erhitzung des Formkörpers eingesetzt werden,
- mindestens ein Verriegelungsgehäuse (12), das auf der schwimmenden Säule (6) angeordnet ist,
- mindestens einen Verriegelungsmechanismus (11), der auf dem oberen Teil des oberen Körpers (8) angeordnet ist und durch Pressen des Verriegelungsgehäuses (12) die Befestigung des unteren Körpers (8) an die schwimmende Säule (6) ermöglicht,
- mindestens einen oberen Formkörper (15), der auf der unteren Oberfläche des oberen Körpers (8) angeordnet ist,
- mindestens einen unteren Formkörper (16), der auf der oberen Oberfläche des unteren Körpers (2) angeordnet ist,
- mindestens ein Regelungssystem (K), das die Bestimmung des Einstellpunktes des Formkörpers ermöglicht
**gekennzeichnet durch**
- den Presszylinder (7), der **durch** Heben der schwimmenden Säule (6) zur Pressposition die automatisch vorzunehmende Einstellung des Formkörpers ermöglicht,
- mindestens einen Ring (14), der so angebaut ist, dass er die Abwärts-Bewegung des oberen Körpers (8) auf jeder schwimmenden Säule (6) verhindern soll,
- mindestens einen Sensor (13), der unter dem unteren Körper (8) befestigt und auf dem Seitenteil des jeden schwimmenden Säule (6) angeordnet ist und zeigt, dass die schwimmende Säulen (6) **durch** Ermitteln des Ringes (14) in richtiger Stellung sind,

2. Eine Presse (1) für Reifenvulkanisierung nach Anspruch 1, **gekennzeichnet durch** einen Sensor (13), der unter dem unteren Körper (8) befestigt, auf dem Seitenteil der jeden schwimmenden Säule (6) angeordnet ist und den Ring (14), der an den schwimmenden Säulen (6) befestigt ist, erfasst und **dadurch** den Verriegelungsmechanismus (11) von einem Pressen verhindert und ermöglicht, dass die schwimmenden Säulen (6) für den nächsten Durchlauf in richtiger Stellung bleiben und sendet Signal an das Regelungssystem (K), indem er während dieses neuen Durchlaufs **durch** Verhindern der Hubzylindern (9) von einem Hochheben den oberen Körper (8) mehr als erfordert, Zeit und Energieeinsparung bietet.

3. Ein Reifenvulkanisierungsprozess durch Anwendung die Presse (1) für Reifenvulkanisierung nach Anspruch 1, **umfassend** die Schritte
- Absenkung der schwimmenden Säulen (6), die an den Presszylindern (7) angeschlossen sind, auf das niedrigste Niveau durch die Abwärts-Bewegung der Presszylindern (7) (101),
- Senkung des oberen Körpers (8) mit dem Hubzylinder (9) und dem oberen Formkörper (15), der den unteren Formkörper (16) (102) berührt,
- der Presszylinder (7) hebt die schwimmenden Säulen (6) an, bis die Ringe (14) den oberen Körper (8) berühren und sie werden durch den Sensor erfasst (13) (103),
- der obere Körper (8) wird auf Aktivierung des Verriegelungsmechanismus (11) durch das Regelungssystem (K), an welches die Sensoren (13) Signal aussenden, an der schwimmenden Säule (6) befestigt, wobei das Verriegelungsgehäuse (12, (104) gedrückt wird,
- Starten des Pressvorgangs, nachdem die Presszylinder (7) die schwimmenden Säulen (6) (105) abgesenkt haben,
- Beenden des Pressvorgangs, nachdem die Presszylinder (7) abgeschlossen haben, die schwimmenden Säulen (6) (106) abzusenken,
- Anheben der schwimmenden Säulen (6), bis die Ringe (14) den oberen Körper (8) berühren und sie werden durch den Sensor (13) erfasst und öffnen den Verriegelungsmechanismus (11) (107),
- Entfernen des abgearbeiteten Reifens und Anheben des oberen Körpers (8) mit dem Hubzylinder (9) zur Ersetzung durch einen neuen (108),
- und Anheben der schwimmenden Säulen (6), um den oberen Körper (8) in der Pressposition am Verriegelungsgehäuse (12) (103) zu fixieren.

4. Ein Reifenvulkanisierungsprozess nach Anspruch (3), **gekennzeichnet durch** den Schritt des Anhebens der schwimmenden Säulen (6) bis die Ringe (14) den oberen Körper berühren und **durch** die Sensoren (13) erfasst sind, um ein Anstoßen des Verriegelungsmechanismus (11) gegen das obere Teil des Verriegelungsgehäuses (12) und somit eine Festklemmung (107) zu verhindern.

## Revendications

1. Une presse de vulcanisation de bandages pneumatiques (1), **comportant:**
- un corps inférieur (2),
- au moins deux cordons de presse reliant le corps inférieur au fond,
- au moins deux logements (4) s'étendant vers l'extérieur sur les deux côtés du corps inférieur (2),
- au moins un connecteur de cylindre de presse (5) monté sous chaque logement de colonne (4),
- au moins une colonne flottant (6) s'étendant vers le haut à travers chaque logement de colonne (4),
- au moins un corps supérieur (8) se déplaçant vers le bas et vers le haut sur les colonnes flottantes (6),
- au moins deux vérins hydrauliques (9) fournissant le mouvement du corps supérieur (8) vers le haut et vers le bas et étant fixés sur le corps inférieur (2),
- au moins deux plaques chauffantes (10) situées à la surface inférieure du corps supérieure (8) et à la surface supérieure du corps inférieure (2) et utilisées pour chauffer le moule,
- au moins un logement de verrouillage (2) situé sur la colonne flottante (6),
- au moins un mécanisme de verrouillage (11) situé sur la partie supérieure du corps supérieure (8) et permettant au corps supérieure (8) d'être fixé sur la colonne flottante (6) en pressant le logement de verrouillage (12),
- au moins un moule supérieure (15) situé sur la surface inférieure du corps supérieure (8),
- au moins un moule inférieure (16) situé sur la surface inférieure du corps inférieure (2),
- au moins deux systèmes de contrôle (K) permettant à la détermination du point d'ajustement du moule,
**caractérisée par**
- un cylindre de presse (7) permettant de faire l'ajustement automatiquement en haussant la colonne flottante (6) à la position de pression,
- au moins un anneau (14) monté dans une manière qu'il prévienne le mouvement du corps supérieure (8) sur chaque colonne flottante (6) vers le bas,
- au moins un senseur (13) monté sous le corps supérieur (8), situé sur la partie latérale de chaque colonne flottante (6), et indiquant que les colonnes flottantes (6) sont dans la position correcte en détectant l'anneau (14).

2. Une presse de vulcanisation de bandages pneumatiques (1) selon la revendication 1, **caractérisée par** un senseur (13) monté sous le corps supérieure (8), situé sur la partie latérale de chaque colonne flottante (6), et détectant l'anneau (14) monté sur les colonnes flottantes (6) et donc prévenant le mécanisme (11) d'être pressé, et permettant aux colonnes flottantes (6) de rester dans la position correcte position pour le cycle subséquent et envoyant un signal au système de contrôle (K) fournissant un gain de temps et de l'énergie en empêchant les vérins hydrauliques (9) de lever le corps supérieure (8) plus que requis pendant ce nouveau cycle.

3. Une méthode de vulcanisation de bandages pneumatiques (1) selon la revendication 1, comportant les étapes suivantes:
- l'abaissement des colonnes flottantes (6) reliées aux cylindres de presse (7) à l'échelon le plus bas avec le mouvement des cylindres de presse (7) (101) vers le bas,
- l'abaissement du corps supérieur (8) vers le bas par les vérins hydrauliques (9) et le moule supérieure (15) en contact avec le moule inférieure (16) (102),
- les cylindres de presse (7) levant les colonnes flottantes (6) jusqu'à ce que les anneaux (14) communiquent avec le corps supérieure (8) et soient détectés par les senseurs (13) (103),
- le corps supérieure (8) étant fixé sur la colonne flottante (6) sur le mécanisme de verrouillage (11) activé par le système de contrôle (K) auquel les senseurs (13) envoient un signal en pressant le logement de verrouillage (12) (104),
- le commencement du processus de pression sur les cylindres (7) abaissant les colonnes flottantes (6) (105),
- la terminaison du procédé de pression sur les extrémités des cylindres (7) abaissant les colonnes flottantes (6) (106),
- les cylindres de presse (7) levant les colonnes flottantes (6) jusqu'à ce que les anneaux (14) communiquent avec le corps supérieure (8) et soient détectés par les senseurs (13) (107) et ouvrissent le mécanisme de verrouillage (11) (107),
- l'enlèvement du pneu traité et le haussement le corps supérieur (8) par le vérin hydraulique (9) pour son remplacement (108),
- et le haussement des colonnes flottantes (6) afin que le corps supérieure (8) dans la position de pression verrouille les logements de verrouillage (12) (103).

4. Un procédé de vulcanisation de bandages pneumatiques selon la revendication 3, **caractérisé par** l'étape du haussement des colonnes flottantes (6) jusqu'à ce que les anneaux (14) communiquent avec le corps supérieure et soient détectés par les senseurs (13) afin d'empêcher le mécanisme de verrouillage (11) s'appuyant contre la partie supérieure du logement de verrouillage (12) d'être bloqué (107).
